# EUROPEAN PATENT APPLICATION

(11) **EP 1 632 617 A2**
(43) Date of publication of application: **08.03.2006**
(21) Application number: 05107664.4
(22) Date of filing: 22.08.2005
(51) Int. Cl.: E03F 5/02, F16L 27/06

(54) **Ball joint for pipes and well comprising such a joint**

(30) Priority: 02.09.2004 FI 20041145
(71) Applicant: Uponor Innovation AB, 513 81 Fristad (SE)
(72) Inventor: Hippeläinen, Esko, 15200 Lahti (FI)
(74) Representative: Huhtanen, Ossi Jaakko

(57) **Abstract**

For instance a well may comprise a joint that includes a connecting element (5) that is able to turn in relation to a fitting (4) of the well, for instance. In connection with the joint there is a first curved interior sealing surface (18) and a second curved interior sealing surface (19). The first curved interior sealing surface (18) can be arranged in the fitting (4) and the second curved interior sealing surface (19) can be arranged in connection with the connecting element (5) that is able to turn in relation to the connecting fitting (4), whereby the curved interior sealing surfaces (18, 19) are arranged in separate elements in the joint. The curved sealing surfaces (18, 19) can be flatter than a spherical surface such that a radius of curvature (R₁, R₂) of the curved sealing surfaces (18, 19) is longer than the distance of each sealing surface point from its centre axis.

## Description

### BACKGROUND OF THE INVENTION

The invention relates to a well, in a bottom part of which there is at least one inlet fitting and/or at least one outlet fitting such that in connection with said fitting there is a joint such that the well comprises a connecting element that is able to turn in relation to a connecting fitting of the joint and the joint comprises a first curved interior sealing surface and a second curved interior sealing surface.

The invention also relates to a joint comprising a joint fitting and a connecting element, the connecting element being arranged to turn in relation to the joint fitting, whereby in connection with the joint there is a first curved interior sealing surface and a second curved interior sealing surface.

### BRIEF DESCRIPTION OF THE INVENTION

EP 1,141,495 describes a bottom of a ground-installed well. Pipes can be joined to the well bottom by means of connecting elements. The direction of the connecting elements can be turned in relation to the connecting fitting of the well bottom by means of a hinged/swivel joint. The joint comprises a first inside bearing surface and a second inside bearing surface in a well wall. The shape of each bearing surface is a portion of a spherical surface. The radius of a spherical surface constituting an outer bearing surface is longer than that of the spherical surface constituting the inner bearing surface, and the diameter of the outer bearing surface decreases in the outwardly direction while the diameter of the inner bearing surface increases in the outwardly direction. The connecting element comprises parts on the outside that fit against the above-mentioned bearing surfaces on the inside of the well wall. This structure is relatively complicated to manufacture and it is a very demanding task to make sure that the joint is tight.

The object of the present invention is to provide a well and a joint of a novel type.

A well is characterized in that a first curved interior sealing surface is arranged in connection with a joint fitting and a second curved interior sealing surface is arranged in connection with a connecting element that is able to turn in relation to the joint fitting.

Further, a well in accordance with a second embodiment is characterized in that the curved sealing surfaces are flatter than a spherical surface such that the radius of curvature of the curved sealing surfaces is longer than the distance of each sealing surface point from its centre axis.

A joint is also characterized in that a first curved interior sealing surface is arranged in connection with a joint fitting and a second curved interior sealing surface is arranged in connection with a connecting element that is able to turn in relation to the joint fitting.

Yet another joint is characterized in that the curved sealing surfaces are flatter than a sphere such that the radius of curvature of the curved sealing surfaces is longer than the distance of each sealing surface point from its centre axis.

For instance, a joint in a well may be such that the joint comprises a connecting element that is able to turn in relation to a joint fitting, which joint fitting may be an inlet fitting or an outlet fitting of the well, for instance. In connection with the joint there is a first curved interior sealing surface and a second curved interior sealing surface such that the first curved interior sealing surface is arranged in the fitting and the second curved interior sealing surface is arranged in connection with the connecting element that is able to turn in relation to the fitting, i.e. the curved interior sealing surfaces are arranged in separate elements in the joint.

Further, for instance a well may comprise a joint that includes a connecting element that is able to turn in relation to a well fitting, for instance. The joint may further comprise a first curved interior sealing surface and a second curved interior sealing surface such that the curved sealing surfaces are flatter than a sphere such that the radius of curvature of the curved sealing surfaces is longer than the distance of each surface point from the centre axis.

The feature that the curved interior sealing surfaces are arranged in separate elements contributes to achieve an advantage that one element, for instance a well manufacturing mould, need not be very complicated, because in connection with one fitting there will only be one curved interior sealing surface and a second curved interior sealing surface will be arranged in a connecting element. Further, it is possible to use various moulds for manufacturing connecting elements to be used in connection with different pipes, but for different pipe diameters, however, it is possible to use one and the same mould in connection with the well. The feature that the curved interior sealing surfaces are flatter than a sphere contributes to achieve an advantage that when the connecting element is turned in relation to the fitting the joint surfaces are not subjected to heavy torsional stresses but the tightness of the joint can be ensured relatively easily. Moreover, the flow section will be even and a protrusion or step produced on turning the connecting element will remain relatively low.

### BRIEF DESCRIPTION OF THE DRAWINGS

The invention will be described in greater detail in connection with the attached drawings, wherein
Figure 1 is a schematic view of a bottom part of a well, seen obliquely from above;
Figure 2 is a schematic side view of a joint cut open;
Figure 3 shows the joint of Figure 2 in a situation where the connecting element has been slightly turned in relation to a fitting and
Figure 4 shows the joint of Figure 2, in which the connecting element has been turned to one extreme position in relation to the fitting.

For the sake of clarity, the invention is shown in a simplified manner in the figures. Like reference numerals refer to like parts in the figures.

### DETAILED DESCRIPTION OF THE INVENTION

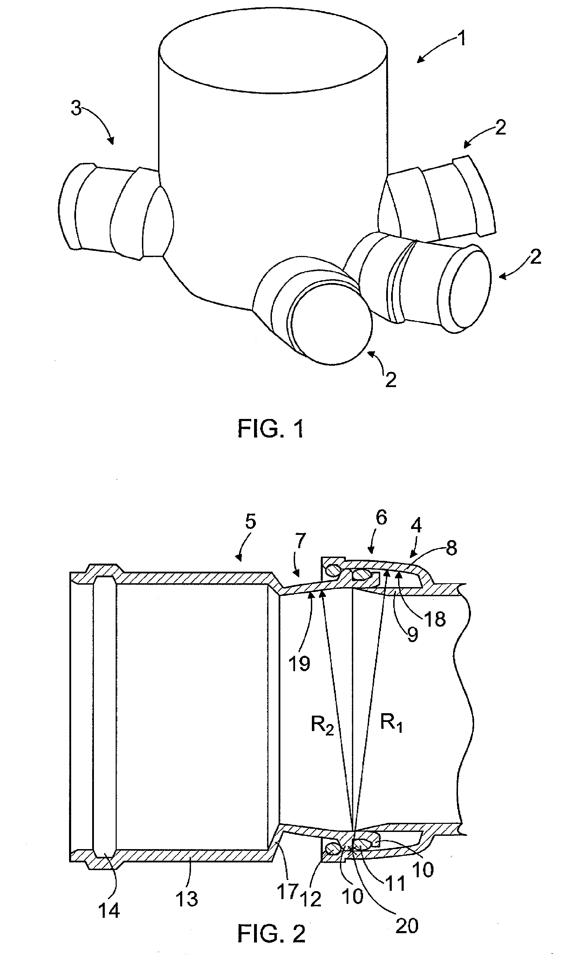

Figure 1 shows a bottom part 1 of a well. The bottom part 1 of the well includes three inlet fittings 2 and one outlet fitting 3. On top of the bottom part 1 of the well it is possible to arrange a required number of rising pipes and other well frame parts. The well is to be installed in the ground. The well can be used e.g. as a drainage well, a sewage well or a rainwater gully.

In connection with the inlet and/or outlet fittings there may be a joint in accordance with Figure 2. In that case the fitting comprises a connecting element that can be turned in relation to the fixedly standing well frame. Thus the inlet and outlet angles of pipes to be connected to the well need not be adjusted accurately in the horizontal and/or vertical direction, but the connecting elements of the well fittings can be adjusted in the direction required by the pipes, whereby connection of the pipes to the well can be implemented without leaks occurring in subsequent use. The present solution can be implemented such, for instance, that the inlet and/or outlet angle may vary ± 10°.

Figure 2 thus shows a joint that can be used in connection with well fittings of Figure 1, for instance. The joint comprises a connecting fitting 4 which may have an integral structure with the well frame. In that case the connecting fitting 4 can be produced, for instance, by simultaneous injection moulding to form an integral structure with the bottom part 1 of the well. On the other hand, the connecting fitting 4 can be welded to the bottom part 1 of the well in a fixed manner, for instance, or the connecting fitting 4 may comprise a socket for attaching the connecting fitting 4 to a simple tubular fitting provided in the bottom part 1 of the well by means of socket joint, for instance. Further, the connecting fitting 4 may be part of a pipe or connectable by a welded joint or socket joint to a pipe.

The joint further comprises a connecting element 5. The joint is formed such that the connecting element 5 is able to turn in relation to the connecting fitting 4. The connecting fitting 4 includes a slot element 6. The tip of the connecting element 5 is arranged between an outer branch 8 and an inner branch 9 of the slot element 6.

The inner surface of the outer branch 8 is provided to constitute a curved sealing surface 18. The tip 7 of the connecting element 5 comprises ribs 10 and between them there is arranged a sealing ring 11. The ribs 10 and the sealing ring 11 are set against the curved interior sealing surface 18 of the outer branch 8, whereby the joint becomes tight.

The inner surface of the tip 7 of the connecting element 5 constitutes a second curved interior sealing surface 19. The tip of the inner branch 9 of the slot 6 is set tightly against the curved interior sealing surface of the tip 7 of the connecting element 5, whereby sand, waste and other impurities are prevented from getting in a gap between the outer 8 and inner 9 branches of the slot 6. Further, the tip of the inner branch 9 of the slot 6 is arranged slightly curved such that flow resistance through the joint will remain rather low, because the flow will not encounter large steps or protrusions.

The radius of curvature of the curved interior sealing surface 18 of the outer branch 8 of the slot 6 is rather gentle. Said radius of curvature R₁ is longer than the distance of each point in said sealing surface 18 from the centre axis of said sealing surface. Thus said sealing surface 18 is flatter than a portion of a sphere. Advantageously said radius of curvature is in the same order with the inner diameter of the sealing surface. The starting point of the radius of curvature R₁ is arranged at a point indicated by reference numeral 20 in the figure. So, when the connecting element 5 is turned in relation to the connecting fitting 4 the other edge of the connecting element 5 remains in its place at said point and the connecting element 5 turns in relation to said point. Thus, there is not so easily produced a force between the connecting fitting 4 and the connecting element 5 that would tend to open the joint.

By means of a locking ring 12 it is ensured that the tip 7 of the connecting element 5 stays in the slot element 6. The diameter of the curved interior sealing surface 18 of the outer branch 8 increases in the outward direction, i.e. to the left in Figure 2. Hence, when the connecting fitting 4 is fabricated by injection moulding, for instance, the injection moulding core can be removed from the interior of the connecting fitting 4 relatively easily.

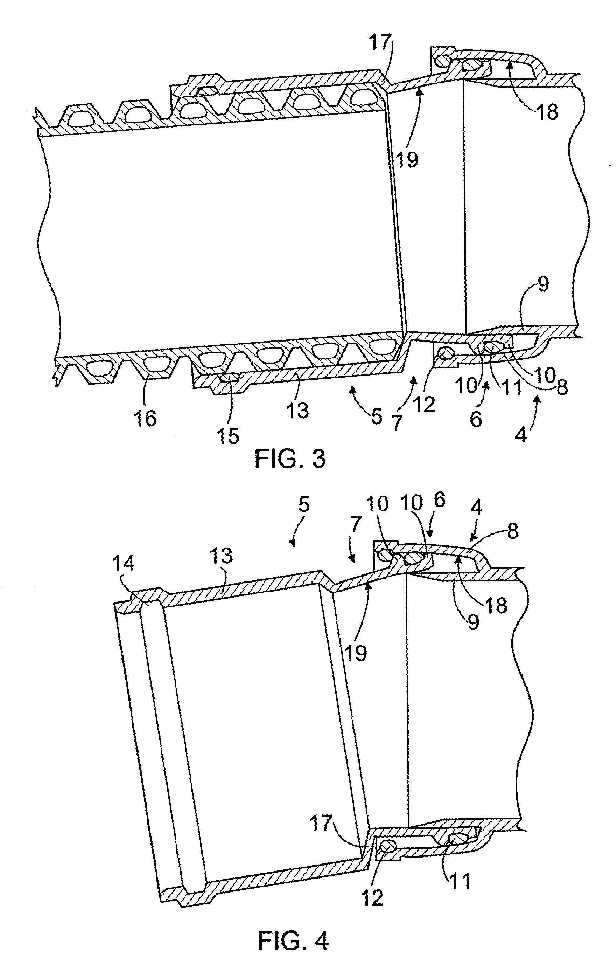

The radius of curvature R₂ of the curved interior sealing surface 19 of the tip 7 of the connecting element 5 is correspondingly flatter than the radius of curvature of a sphere, i.e. said radius of curvature R₂ is longer than the distance of each point of the sealing surface 19 from its centre axis. Advantageously the radius of curvature R₂ of the curved interior sealing surface 19 of the tip 7 is of the same order as the inner diameter of said sealing surface 19, whereby the tip of the inner branch 9 of the slot element 6 slides along the sealing surface 19 as the connecting element 5 is turned in relation to the connecting element 4 as shown in Figure 3 and further in Figure 4. At the same time the ribs 10 and the sealing ring 11 slide along the sealing surface 18. After turning the connecting element 5, the curved sealing surfaces 18 and 19 are at least at one edge one upon the other, i.e. within each other, such that they are at least partly at the same point in the axial direction. This makes it possible that the turning point is at a distance from the centre axis, advantageously on the same level with the curved sealing surface.

The diameter of the curved interior sealing surface 19 of the tip 7 reduces in the outward direction, i.e. in Figure 2 to the left. Because the connecting element 5 is a separate piece from the connecting fitting 4, it can be produced with a specific injection mould, which makes the manufacturing relatively simple. Further, providing the curved interior sealing surface 19 in the turnable connecting element 5 makes the whole joint relatively simple.

The connecting element 5 also comprises a socket part 13 that is provided with a sealing groove 14. A sealing 15 is arranged in the sealing groove 14 as shown in Figure 3 to seal the gap between the socket part 13 and the pipe 16.

The connecting fitting 4 and the connecting element 5 are provided symmetrical for the sealing surfaces 18 and 19 and for the structures in the vicinity thereof, whereby in view of tightness and flow resistance at said point the connecting element 5 would allow rotation about its centre axis in relation to the connecting fitting 4. Instead, the socket part 13 can be provided asymmetrical in relation to the tip of the connecting element 7 such that a step 17 is different in size on different sides of the connecting element 5. Figure 3 shows a relatively thick-walled pipe 16 arranged inside the connecting element 5. The connecting element 5 is arranged such that the step 17 is at its largest in the lower part of the joint, and thus water, waste or the like flowing in the lower part of the joint will not run into a large protrusion. If a pipe whose outer diameter is equal in size but whose wall is considerably thinner, for instance a plain-walled pipe, is attached to the connecting element 5, the connecting element will be turned such that the lowest portion of the step 17 is down in the joint, whereby the thickness of the wall of the pipe 16 and the size of the step 17 in the lower part of the connecting element are approximately equal and there will be no step to impede the flow. Because the sealing surfaces 18 and 19 and the relating structures are co-axial and symmetrical, the sealing and flowing properties remain good in this respect.

The drawings and the relating description are only intended to illustrate the inventive idea. The details of the invention may vary within the scope of the claims. Thus, the attached figures show that the connecting fitting 4 is stationary and the connecting element 5 is moveable, but the joint can also be provided such that the element indicated by reference numeral 4 in the figures is moveable and the element indicated by reference numeral 5 is stationary. A solution is also possible where both elements indicated by reference numeral 4 and reference numeral 5 are moveable.

## Claims

1. A well, in a bottom part (1) of which there is at least one inlet fitting (2) and/or at least one outlet fitting (3) such that in connection with said fitting (2, 3) there is a joint comprising a connecting fitting (4) and a connecting element (5) whereby the connecting fitting (4) and/or the connecting element (5) are able to turn in relation to each other and the joint comprises a first curved interior sealing surface (18) and a second curved interior sealing surface (19), **characterized in that** the first curved interior sealing surface (18) is arranged in connection with the connecting fitting (4) and the second curved interior sealing surface (19) is arranged in connection with the connecting element (5).

2. A well as claimed in claim 1, **characterized in that** the curved sealing surfaces (18, 19) are flatter than the spherical surface such that a radius of curvature (R₁, R₂) of the curved sealing surfaces (18, 19) is longer than the distance of each sealing surface point from its centre axis.

3. A well as claimed in claim 2, **characterized in that** the radius of curvature (R₁, R₂) of the curved sealing surface (18, 19) is substantially equal to the diameter of the curved sealing surface (18, 19).

4. A joint comprising a connecting fitting (4) and a connecting element (5), the connecting element (5) and/or the connecting fitting (4) being arranged to turn in relation to each other, whereby in connection with the joint there is a first curved interior sealing surface (18) and a second curved interior sealing surface (19), **characterized in that** the first curved interior sealing surface (18) is arranged in connection with the connecting fitting (4) and the second curved interior sealing surface (19) is arranged in connection with the connecting element (5).

5. A joint as claimed in claim 4, **characterized in that** the curved sealing surfaces (18, 19) are flatter than the spherical surface such that the radius of curvature (R₁, R₂) of the curved sealing surfaces (18, 19) is longer than the distance of each sealing surface point from its centre axis.

6. A joint as claimed in claim 5, **characterized in that** the radius of curvature (R₁, R₂) of the curved sealing surface (18, 19) is substantially equal to the diameter of the curved sealing surface (18, 19).

7. A well, in a bottom part (1) of which there is at least one inlet fitting (2) and/or at least one outlet fitting (3) such that in connection with said fitting (2, 3) there is a joint comprising a connecting fitting (4) and a connecting element (5) whereby the connecting fitting (4) and/or the connecting element (5) are able to turn in relation to each other and the joint comprises a first curved interior sealing surface (18) and a second curved interior sealing surface (19), **characterized in that** the curved sealing surfaces (18, 19) are flatter than the spherical surface such that a radius of curvature (R₁, R₂) of the curved sealing surfaces (18, 19) is longer than the distance of each sealing surface point from its centre axis.

8. A well as claimed in claim 7, **characterized in that** that the radius of curvature (R₁, R₂) of the curved sealing surface (18, 19) is substantially equal to the diameter of the curved sealing surface (18, 19).

9. A well as claimed in claim 7 or 8, **characterized in that** the first curved interior sealing surface (18) is arranged in connection with the connecting fitting (4) and the second curved interior sealing surface (19) is arranged in connection with the connecting element (5).

10. A joint comprising a connecting fitting (4) and a connecting element (5), the connecting element (5) and/or the connecting fitting (4) being arranged to turn in relation to each other, whereby in connection with the joint there is a first curved interior sealing surface (18) and a second curved interior sealing surface (19), **characterized in that** the curved sealing surfaces (18, 19) are flatter than the spherical surface such that a radius of curvature (R₁, R₂) of the curved sealing surfaces (18, 19) is longer than the distance of each sealing surface point from its centre axis.

11. A joint as claimed in claim 10, **characterized in that** the radius of curvature (R₁, R₂) of the curved sealing surface (18, 19) is substantially equal to the diameter of the curved sealing surface (18, 19).

12. A joint as claimed in claim 10 or 11, **characterized in that** the first curved interior sealing surface (18) is arranged in connection with the connecting fitting (4) and the second curved interior sealing surface (19) is arranged in connection with the connecting element (5).
